# FASCICULE DE BREVET EUROPEEN

(11) **EP 2 364 552 B1**
(45) Date de publication et mention de la délivrance du brevet: **06.05.2020**
(21) Numéro de dépôt: 09795458.0
(22) Date de dépôt: 01.12.2009
(51) Int. Cl.: H04N 19/593

(54) **DISPOSITIF D'ENCODAGE D'UN FLUX D'IMAGES NUMERIQUES ET DISPOSITIF DE DECODAGE CORRESPONDANT AVEC APPROXIMATION DU VOISINAGE D'UN BLOC PAR LE VOISINAGE ÉLARGI DU BLOC**
VIDEOKODIERGERÄT UND -DEKODIERGERÄT MIT ANNÄHERUNG EINER BLOCKUMGEBUNG DURCH DIE VERGRÖSSERTE UMGEBUNG DES BLOCKS
DEVICE FOR ENCODING A DIGITAL IMAGE STREAM AND CORRESPONDING DECODING DEVICE WITH APPROXIMATION OF THE NEIGHBOURHOOD OF A BLOCK BY THE WIDENED NEIGHBOURHOOD OF THE BLOCK

(30) Priorité: 03.12.2008 FR 0806775
(43) Date de publication de la demande: 14.09.2011
(73) Titulaire: INRIA - Institut National de Recherche en Informatique et en Automatique, 78150 Le Chesnay (FR); Université de Rennes 1, 35000 Rennes (FR); Centre National de la Recherche Scientifique (C.N.R.S.), 75016 Paris (FR)
(72) Inventeur: GUILLEMOT, Christine, 35135 Chanteple (FR); FUCHS, Jean-Jacques, 35000 Rennes (FR); GUILLO, Laurent, 35520 La Mezière (FR)
(74) Mandataire: Loubet, Bruno Thomas
(86) Numéro de dépôt international: PCT/FR2009/001361
(87) Numéro de publication internationale: WO 2010/063898

(56) Documents cités:
- YUNFEI ZHENG ET AL: "Intra prediction using template matching with adaptive illumination compensation" IMAGE PROCESSING, 2008. ICIP 2008. 15TH IEEE INTERNATIONAL CONFERENCE, IEEE, PISCATAWAY, NJ, USA, 12 octobre 2008 (2008-10-12), pages 125-128, XP031373954 ISBN: 978-1-4244-1765-0
- GHARAVI-ALKANSARI M ET AL: "a generalized method for image coding using fractal-based techniques" JOURNAL OF VISUAL COMMUNICATION AND IMAGE REPRESENTATION, vol. 8, 2 juin 1997 (1997-06-02), pages 208-225, XP002548040 ISBN: 978-0-8186-6952-1
- A. MARTIN ET AL: "sparse representation for image prediction" EUSIPCO, septembre 2007 (2007-09), pages 1255-1259, XP002538752 Poznan

## Description

L'invention concerne le traitement d'images et plus particulièrement les architectures de codage vidéo.

Les dix dernières années ont vu un développement conséquent de la diffusion des vidéos sous forme électronique. Le format le plus connu et le plus répandu de nos jours est le MPEG-2 utilise par les DVD.

La qualité de ce standard a été depuis améliorée avec le MPEG-4 et plus récemment avec le H.264. Cependant, au fur et à mesure que les architectures de codage ont progressé, plusieurs problèmes ont progressivement surgi.

Dans un premier temps, il a fallu améliorer la qualité des images restituées. Cela a été réalisé en augmentant progressivement la taille des fichiers encodés.

Cela a permis d'augmenter le débit d'encodage, c'est-à-dire la quantité de données par seconde. Assez rapidement, le débit a du être limité pour des raisons de limitations matérielles.

Diverses architectures dont celles citées ci-dessus ont donc été développées, afin de compresser de manière plus fidele à débit comparable. Ces architectures ont eu pour résultat une augmentation conséquente du coût en temps de calcul de décodage et d'encodage comme les architectures se sophistiquaient.

En outre, cette sophistication a eu pour conséquence de rendre les informations encodées de plus en plus critiques. En effet, plus les architectures sont avancées, et plus les données à décoder représentent un "condensé" d'informations, et plus les erreurs de transmission de ces données tendent à dégrader l'image restituée. Le document Zheng, Y., Yin, P., Escoda, O. D., Li, X., & Gomila, C. (2008, October). Intra prédiction using template matching with adaptive illumination compensation. In Image Processing, 2008. ICIP 2008. 15th IEEE International Conference on (pp. 125-128). IEEE. divulgue un algorithme de codage et de décodage vidéo utilisant une comparaison de templates.

Le document Gharavi-Alkhansari, M., & Huang, T. S. (1997). A generalized method for image coding using fractal-based techniques. Journal of Visual Communication and Image Representation, 8(2), 208-225. divulgue une method de codage d'image qui exploite les similarités entre pixels de différentes régions de l'image, par l'utilisation de fractales.

L'invention vient améliorer la situation.

A cet effet, l'invention propose un dispositif de décodage d'un flux de données d'images numériques, comprenant :
* une mémoire de travail pour des données de blocs d'image déjà décodés,
* un pilote, monté pour analyser un flux incident de données d'images numériques, et agencé pour déterminer des données à décoder d'un bloc courant de coordonnées x, y dans le découpage de l'image en blocs de type premières données ou secondes données, pour stocker les premières données dans la mémoire de travail en tant que données de blocs d'image déjà décodés, et pour appeler une unité de décodage avec les secondes données à décoder,
* l'unité de décodage réagissant à la réception de secondes données par :
   - la sélection, par un sélecteur de voisinage d'approximation, de données de blocs d'image déjà décodées correspondant à un voisinage immédiat du bloc courant, ledit voisinage d'approximation étant constitué de l'ensemble des blocs de coordonnées (p, q) avec p et q tels que :
      - k1 et k2 sont deux indices positifs ;
      - p est choisi dans l'intervalle [x-k1;x] ;
      - q est choisi dans l'intervalle [y-k2;y] ;
      - (p,q) est différent de (x,y) ;
   - la sélection, par un sélecteur de base d'approche, de certains blocs d'image déjà décodés correspondant à un voisinage élargi du bloc courant ne comprenant pas le voisinage d'approximation, formant une fenêtre de recherche, qui avoisine le bloc courant, ledit voisinage élargi définissant une fenêtre de recherche étant constitué de l'ensemble des blocs de coordonnées (p, q) avec p et q tels que :
      - m et n sont deux indices positifs ;
      - p est choisi dans l'intervalle [x-m;x] pour q choisi dans l'intervalle [y-n;y-k2-1];
      - p est choisi dans l'intervalle [x-m;x-k1-1] pour q choisi dans l'intervalle [y-k2;y] ;
   - l'agencement, par le sélecteur de base d'approche, des blocs de la fenêtre de recherche en un voisinage de recherche formant une base d'approche, ledit voisinage de recherche étant sous la forme d'une matrice dont :
      - chaque colonne comprend les échantillons de k1^{∗}k2 blocs, et
      - chaque colonne comprend des blocs de la fenêtre de recherche, sélectionnés par une fenêtre glissante de taille k1^{∗}k2 partant du bloc de coordonnées [x-m; y-n] et parcourant la fenêtre de recherche de haut en bas et de gauche à droite ;
   - la suppression de la matrice, et le stockage des dernières lignes de la matrice correspondant à la taille du bloc courant ;
   - le calcul, par un calculateur, d'une approximation du bloc courant, comprenant :
      - la définition d'une fonction algébrique linéaire des données de la base d'approche paramétrée par la mise en œuvre d'un algorithme de type « matching pursuit » pour approximer les données du voisinage d'approximation à partir des données de la base d'approche ;
      - la restauration de la matrice formant base d'approche, en ajoutant à nouveau les lignes supprimées et stockées ;
      - l'application de la fonction algébrique à la matrice restaurée, pour approximer le bloc courant ;
   - le stockage dans la mémoire de travail, pour le bloc courant, de données de blocs décodés tirées de cette approximation.

L'invention concerne également un dispositif d'encodage d'un flux de données d'images numériques, caractérisé en ce qu'il comprend :
* une mémoire de travail pour des données de blocs d'image déjà encodés,
* un pilote, monté pour analyser un flux incident de données d'images numériques, et agencé pour déterminer des données à encoder d'un bloc courant de coordonnées x, y dans le découpage de l'image en blocs de type premières données ou secondes données, pour stocker les premières données dans la mémoire de travail en tant que données de blocs d'image déjà encodes, et pour appeler une unité d'encodage avec les secondes données à encoder,
* l'unité d'encodage réagissant à la réception de secondes données par:
   - la sélection, par un sélecteur de voisinage d'approximation, de données de blocs d'image déjà encodées correspondant à un voisinage immédiat du bloc courant, ledit voisinage d'approximation étant constitué de l'ensemble des blocs de coordonnées (p, q) avec p et q tels que :
      - k1 et k2 sont deux indices positifs ;
      - p est choisi dans l'intervalle [x-k1;x] ;
      - q est choisi dans l'intervalle [y-k2;y] ;
      - (p,q) est différent de (x,y) ;
   - la sélection, par un sélecteur de base d'approche, de certains blocs d'image déjà encodés correspondant à un voisinage élargi du bloc courant ne comprenant pas le voisinage d'approximation, formant une fenêtre de recherche, qui avoisine le bloc courant, ledit voisinage élargi définissant une fenêtre de recherche étant constitué de l'ensemble des blocs de coordonnées (p, q) avec p et q tels que :
      - m et n sont deux indices positifs ;
      - p est choisi dans l'intervalle [x-m;x] pour q choisi dans l'intervalle [y-n;y-k2-1];
      - p est choisi dans l'intervalle [x-m;x-k1-1] pour q choisi dans l'intervalle [y-k2;y] ;
   - l'agencement, par le sélecteur de base d'approche, des blocs de la fenêtre de recherche en un voisinage de recherche formant une base d'approche, ledit voisinage de recherche étant sous la forme d'une matrice dont :
      - chaque colonne comprend les échantillons de k1^{∗}k2 blocs, et
      - chaque colonne comprend des blocs de la fenêtre de recherche, sélectionnés par une fenêtre glissante de taille k1^{∗}k2 partant du bloc de coordonnées [x-m; y-n] et parcourant la fenêtre de recherche de haut en bas et de gauche à droite ;
   - la suppression de la matrice, et le stockage des dernières lignes de la matrice correspondant à la taille du bloc courant ;
   - le calcul, par un calculateur, d'une approximation du bloc courant, comprenant :
      - la définition d'une fonction algébrique linéaire des données de la base d'approche, paramétrée par la mise en œuvre d'un algorithme de type « matching pursuit » pour approximer les données du voisinage d'approximation à partir des données de la base d'approche;
      - la restauration de la matrice formant base d'approche, en ajoutant à nouveau les lignes supprimées et stockées ;
   - l'application de la fonction algébrique à la matrice restaurée, pour approximer le bloc courant ;- le stockage dans la mémoire de travail, pour le bloc courant, de données de blocs déjà encodées tirées de l'approximation du bloc courant.

De tels dispositifs sont particulièrement avantageux car ils offrent une grande qualité d'image tout en permettant de mettre en place une grande variété de schémas d'encodage qui permettent de faire des compromis taux de compression/robustesse extrêmement intéressants.

D'autres caractéristiques et avantages de l'invention apparaitront mieux à la lecture de la description qui suit, tirée d'exemples donnés à titre illustratif et non limitatif, tirés des dessins sur lesquels :
- la figure 1 représente une vue schématique d'un encodeur et d'un décodeur selon l'invention ;
- la figure 2 représente un organigramme de fonctionnement d'un premier mode de réalisation d'un encodeur de la figure 1 ;
- la figure 3 représente une fonction de la figure 2 ;
- la figure 4 représente un organigramme de fonctionnement d'un deuxième mode de réalisation d'un encodeur de la figure 1 ;
   - la figure 5 représente un exemple de fonction de la figure 4 ; et
   - la figure 6 représente un organigramme de fonctionnement d'un mode de réalisation d'un décodeur de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparait dans les dossiers officiels. Pour le reste, il réserve intégralement ses droits.

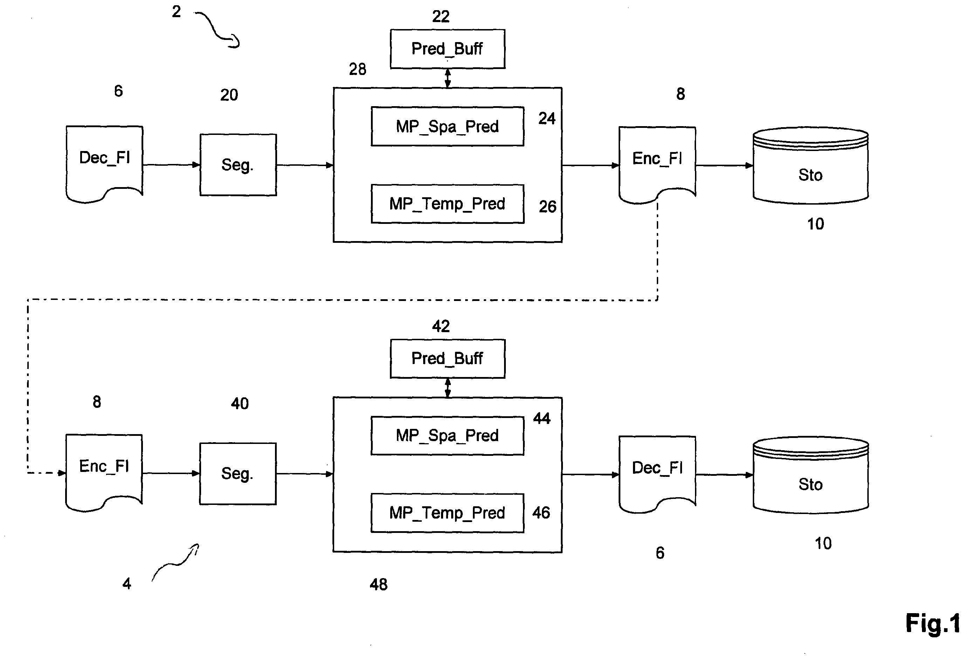

La figure 1 représente une vue schématique d'un encodeur 2 et d'un décodeur 4 selon l'invention.

L'encodeur 2 reçoit un fichier vidéo décodé 6, et le transforme en fichier vidéo encodé 8 pour stockage dans une mémoire de stockage 10.

On notera tout d'abord que, bien que l'architecture de codage et les éléments particuliers qui la composent sont particulièrement adaptés au codage/décodage des fichiers vidéo, l'invention n'est pas limitée à ce seul domaine et pourra trouver son application avec d'autres types de fichiers.

De même, par mémoire de stockage 10, on entend tout type de mémoire de stockage, des plus classiques de nos jours comme un disque dur, ou une mémoire flash, aux systèmes de stockage plus complexes de type SAN, NAS ou autrement stockés a travers un réseau.

Inversement, le décodeur 4 reçoit un ficher encodé 8, et le transforme en fichier vidéo décodé 6 pour stockage dans une mémoire de stockage 10.

L'encodeur 2 comprend un découpeur 20, une mémoire tampon 22, une unité d'approximation spatiale 24, une unité d'approximation temporelle 26, et une unité d'encodage 28.

Le décodeur 4 comprend un découpeur 40, une mémoire tampon 42, une unité d'approximation spatiale 44, une unité d'approximation temporelle 46, et une unité de décodage 48.

Comme cela apparaitra mieux par la suite, l'encodeur 2 et le décodeur 4 ont des structures extrêmement similaires. Ces similitudes reflètent le fait que cette architecture est connue de manière symétrique pour rendre le décodeur 4 très indépendant du processus d'encodage.
En effet, cette symétrie de structure permet d'assurer que le décodeur 4 peut fonctionner de manière découplée de l'encodeur 2, puisqu'il fonctionne très similairement.

Comme on le verra plus bas, les mémoires tampon 22 et 42 peuvent être vues comme des mémoires de travail.

L'invention utilise une technique de codage qui vise à approcher un bloc d'une image par une combinaison linéaire d'autres blocs déjà connus.

Cette technique est bien plus efficace que les "motion vectors" connus de l'art antérieur en termes de qualité. En outre, comme on le verra plus bas, cette technique permet de réduire la quantité de données critiques qui doivent subir un codage entropique. Cela rend le décodeur 4 plus indépendant des informations encodées transmises et donc plus robuste que dans les techniques antérieures.

Les unités d'approximation spatiale 24 et 44 et temporelle 26 et 46 mettent en œuvre des algorithmes mathématiques de "matching pursuit", qui permettent d'approcher un bloc d'image par une combinaison linéaire de blocs déjà connus, en minimisant le nombre d'éléments dans cette combinaison.

Les algorithmes de "matching pursuit" fonctionnent par itérations successives, en construisant peu à peu un vecteur de poids associe à une base d'approche pour un vecteur en entrée.

Cela signifie que, pour approcher un vecteur donné (par exemple un vecteur composé des données de luminance et chrominance d'un bloc de pixels donné) par une base d'approche donnée (par exemple ensemble de vecteurs composés des données de luminance et chrominance de blocs de pixels environnants), on cherche une suite de coefficients.

Cette suite de coefficients est telle que, en réalisant une combinaison linéaire des vecteurs de la base avec ces coefficients, on obtient une approximation du vecteur en entrée avec un seuil de précision choisi.

La suite de coefficients peut elle-même être représentée sous la forme d'un vecteur dont les valeurs sont établies itérativement.

Les algorithmes de "matching pursuit" visent à produire le vecteur de coefficients le plus rapidement possible, et de sorte qu'il contienne un maximum de zéros, ce qui permet de ne transmettre que les valeurs non nulles (et leur indice dans le vecteur de coefficients).

Chaque opération d'un algorithme de "matching pursuit", est caractérisée par l'indice de l'itération, le vecteur d'approche calculé à cette iteration, et le vecteur approché correspondant au produit du vecteur d'approche par la base d'approche.

Il est possible de stocker les résultats intermédiaires de l'ensemble des itérations, et l'algorithme s'arrête lorsque la différence entre le vecteur approché et le vecteur donné est inférieure à une valeur seuil. Par différence, on entend la mesure choisie pour l'algorithme, par exemple la norme euclidienne.

Il existe de nombreuses variantes dans les algorithmes de "matching pursuit", et l'homme du métier saura les reconnaitre. D'autres algorithmes pourraient être mis en œuvre que les algorithmes de "matching pursuit", qui sont basés sur une reconstruction à partir des valeurs de blocs environnants. L'homme du métier saura également les reconnaitre et adapter l'invention le cas échéant.

Les unités d'approximation temporelle utilisent comme blocs de référence pour la base d'approche des blocs dans les images précédentes (backward prédiction) ou suivantes (forward prédiction), ou un mélange des deux.

Les unités d'approximation spatiale utilisent comme blocs de référence pour la base d'approche des blocs de la même image.

La notion de bloc de référence implique de découper une image d'un fichier donné en blocs réguliers.

Ce découpage mentionné est réalisé par les découpeurs 20 et 40. Ces éléments ont pour fonction de "découper" le fichier en blocs courants, et de traiter ces blocs courants en les transmettant aux unités d'encodage et de décodage. Les découpeurs 20 et 40 jouent donc le rôle de pilotes, en traitant les images une par une, et bloc par bloc.

Le découpage d'une image étant classiquement fait du coin en haut à gauche vers le coin en bas à droite en parcourant l'image par ligne de blocs, ces blocs sont donc choisis "en haut (aussi bien à gauche qu'à droite) par rapport au bloc et à gauche dans la ligne du bloc" par rapport à un bloc courant.

Il en découle que, pour qu'un bloc courant soit encodé/décodé par la méthode spatiale, les blocs en haut à gauche le précédant doivent être connus.

Cela signifie que les blocs situés le plus à gauche et le plus en haut d'une image ne peuvent pas être encodés par cette méthode et qu'ils doivent être encodés/décodés différemment par exemple par un codage dit "intra", des autres blocs de la même image, soit par exemple par application d'une transformation, puis d'une quantification suivie d'un codage entropique. En variante, ces blocs peuvent aussi être encodes avec la méthode temporelle.

Il va de soit que, si l'image est parcourue dans un sens différent, c'est ce sens qui définira quels blocs doivent être connus pour l'application de la méthode spatiale.

La Demanderesse a observé que, pour chaque série de 25 images environ, la première image est en général encodée selon la méthode spatiale, et les suivantes selon la méthode temporelle.

Ainsi, il n'y a qu'une seule image sur 25 qui nécessite une initialisation. Comme cela a été décrit plus haut, cette initialisation peut se faire en codant les données des bords par transformation, quantification puis codage entropique, ou par codage selon la méthode temporelle.

Il en découle que seuls le bord haut et le bord gauche d'une image sur 25 ont dans la pratique besoin d'être transmis en codant les données des bords par transformation, quantification puis codage entropique pour réaliser l'initialisation de l'invention. Ensuite, le fonctionnement se déroule comme décrit plus haut pour le reste de cette image, ainsi que pour les 24 images suivantes.

En outre, comme on le verra plus has, a l'exception des blocs sur les bords haut et gauche de l'image, les blocs d'une image peuvent être encodes indépendamment par la méthode spatiale ou temporelle. Un marqueur indiquant la méthode utilisée suffira au décodage.

Comme cela apparait maintenant plus clairement, il convient donc de distinguer deux types de données des blocs courants du fichier 8 :
- les données complètes, n'ont pas vocation à être décodées et qui sont les données des blocs auxquels il est fait référence dans les paragraphes précédents ; et
- des données-paramètres, qui vont être décodées, et qui représentent la majeure partie des données du fichier 8.

Dans le mode de réalisation décrit ici, c'est le découpeur 40 qui fait cette distinction et qui :
- stocke directement dans la mémoire de travail 42 les données complètes en tant que données de blocs d'image déjà décodés;
- appelle l'unité de décodage 48 avec les données-paramètres pour leur traitement.

Cette distinction pourrait cependant être réalisée par l'unité de décodage elle-même.

La situation est similaire du côté de l'encodeur. En effet, comme on l'a vu plus haut, on sait parmi les données à encoder quelles sont des données complètes et quelles sont des données-paramètres.

Dans le mode de réalisation décrit ici, c'est le découpeur 20 qui fait cette distinction et qui :
- stocke directement dans la mémoire de travail 22 les données complètes en tant que données de blocs d'image déjà encodés;
- appelle l'unité d'encodage 28 avec les données-paramètres pour leur traitement. Cette distinction pourrait cependant être réalisée par l'unité d'encodage elle-même.

Le fichier encode 8 peut en outre comprendre comme données-paramètres de chaque bloc des données à décoder et des données à décoder complémentaires. Les données encodées et les données encodées complémentaires seront décrites plus avant avec les différents modes de réalisation.

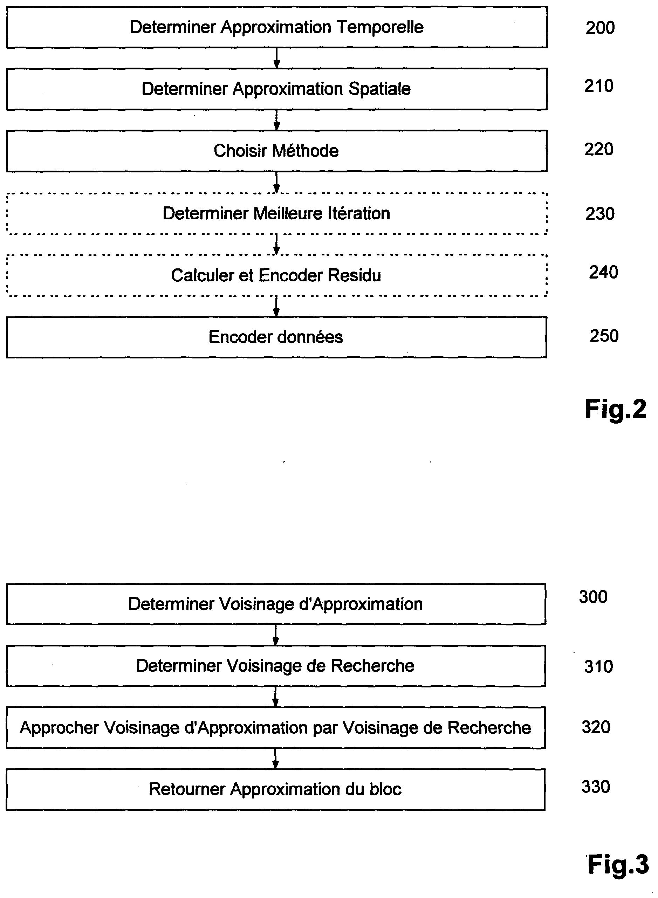

La figure 2 représente un diagramme générique du fonctionnement d'un premier mode de réalisation pour l'encodeur 2.
Dans ce premier mode de réalisation, l'architecture est basée sur le principe que les unités d'approximation côté encodeur et côté décodeur vont fonctionner de manière identique.

Pour cela, l'approximation d'un bloc donne n'est pas réalisée sur la base de ce bloc, mais sur la base de blocs environnants déjà encodés/décodés. Ainsi, le décodeur 4 n'a plus besoin que de connaitre la méthode qui a servi au calcul de l'approximation d'un bloc pour le retrouver.

Dans ce premier mode de réalisation, l'unité d'encodage 28 appelle l'unité d'approximation temporelle 24 dans une opération 200 et l'unité d'approximation spatiale 26 dans une opération 210, avec le bloc courant reçu du découpeur 20.

Lors de ces opérations, les unités 24 et 26 déterminent les approximations du bloc courant selon les méthodes spatiale et temporelle. Les opérations 200 et 210 peuvent être réalisées séquentiellement ou en parallèle.

Dans une opération 220, l'unité d'encodage 28 reçoit ces deux approximations, détermine celle qui est la plus proche du bloc courant, et la stocke dans la mémoire tampon 22.

Dans d'autres modes de réalisation, le critère de choix entre ces approximations peut être basé sur un compromis entre la qualité de l'approximation (c'est-à-dire la fidélité « absolue » de l'approximation) et le débit (la quantité d'information à transmettre) pour les données complémentaires (résidu et/ou numéro d'itération).

L'opération 220 peut être suivie de deux opérations optionnelles 230 et 240, et le codage des données encodées du bloc courant est réalisé dans une opération 250. Dans l'opération 230 optionnelle, l'unité d'encodage peut en outre choisir une itération la plus favorable.

Comme on l'a vu, dans ce premier mode de réalisation, c'est le voisinage du bloc courant qui est approche et non pas le bloc courant lui-même.

Il en découle que l'approximation obtenue par itérations successives jusqu'a atteindre un seuil fixe n'est pas forcément la plus proche du bloc courant.

Il est en effet possible qu'une des itérations a produit une approximation qui n'approchait pas le voisinage avec la précision requise du seuil, mais qui approchait le bloc courant de manière plus proche que l'approximation de la dernière itération.

L'opération 230 optionnelle permet ainsi d'augmenter encore la précision de l'encodage, en choisissant celle des itérations qui représente la meilleure approximation du bloc courant.

L'opération 230 peut être réalisée de diverses manières.

Ainsi, elle peut être réalisée séquentiellement avec l'opération 220, c'est-à-dire que dans l'opération 220, la méthode la plus précise est choisie, et que dans l'opération 230 l'itération la plus précise de la méthode choisie dans l'opérations 220 est déterminée.

Dans une autre variante, l'opération 230 peut être incorporée a l'opération 220, l'itération représentant la meilleure approximation du bloc courant pour les deux méthodes étant choisie parmi toutes les itérations des deux méthodes.

Pour la réalisation de l'opération 230, il est possible d'opérer après que les opérations 200 et 210 ont été exécutées. Dans ce cas, il suffit de stocker dans la mémoire tampon 22 l'approximation en résultat de chacune des itérations de chaque méthode avec son indice.

Il suffit alors à l'opération 230 d'accéder à ces approximations et de choisir l'indice d'itération de la meilleure.

Dans une autre variante, l'opération 230 peut être simplifiée en modifiant légèrement les opérations 200 et 210 pour qu'elles stockent au cours des itérations la meilleure approximation du bloc courant et son indice d'itération.

Cela peut être réalisé en rajoutant dans l'algorithme de "matching pursuit" un tampon approprié qui stocke la meilleure approximation en cours.

Alors, à chaque fin d'itération, l'approximation obtenue est comparée à l'approximation du tampon.

Si cette nouvelle approximation approche mieux le bloc courant, alors elle est stockée dans le tampon. Sinon, l'approximation stockée dans le tampon est inchangée.

Ainsi, dès la fin des opérations 200 et 210, le tampon contiendra déjà la meilleure approximation spatiale d'une part et temporelle d'autre part, et les opérations 220 et 230 seront réalisées par le choix de la meilleure des deux approximations tirées de ces opérations.

A la fin de l'opération 230, l'approximation du bloc courant correspondante est stockée dans la mémoire tampon 22.

Dans une autre opération optionnelle 240, l'unité d'encodage 28 détermine un résidu et l'encode. Le résidu est calculé en réalisant la différence entre les données à encoder du bloc courant et l'approximation de ce bloc qui vient d'être calculée. Cet encodage inclut généralement une transformée DCT et une quantification pour éliminer les termes nuls ou faibles.

Les données résultantes subissent alors un codage entropique et sont stockées comme données encodées complémentaires dans le fichier encodé.

Ensuite, les données encodées complémentaires sont déquantifiées et subissent une opération DCT inverse et sont ajoutées à l'approximation du bloc courant qui correspond aux données encodées pour obtenir des données encodées-décodées.

Ces données encodées-décodées sont alors stockées dans la mémoire tampon 22 à la place de l'approximation du bloc courant.

Ainsi, on peut considérer que ces données constituent des « nouvelles données de bloc d'image encodé », qui viendront remplacer les données à encoder pour l'encodage des blocs ultérieurs.

Le but de cette opération est de prévenir le bruit de quantification. Le fait d'utiliser les données encodées-décodées pour l'encodage des blocs ultérieurs permet d'éviter une dérive due au bruit de quantification sur les résidus.

En effet, comme l'approximation du bloc courant n'est pas transmise au décodeur, les données encodées-décodées représentent les données qui seront à la disposition du décodeur 4 lors du décodage.

Il est donc avantageux que ces données soient utilisées pour encoder les blocs suivants.

On notera que, dans le cas où l'opération 240 n'est pas réalisée, les données de l'approximation du bloc courant tirées de l'opération 220 présentes dans la mémoire 22 correspondent aux données encodées-décodées, ou données de bloc d'image déjà encodé. Enfin, dans une opération 250, le type d'approximation (spatial ou temporel!) tiré de l'opération 220 est encodé, et le cas échéant, l'indice de meilleure itération tiré de l'opération 230.

La figure 3 représente un exemple de mise en œuvre de l'algorithme de "matching pursuit" des opérations 200 et 210.

Dans une opération 300, l'unité d'approximation déterminé un voisinage d'approximation du bloc courant. C'est ce voisinage d'approximation qui va représenter le bloc courant dans l'algorithme.

Dans le mode de réalisation décrit ici, l'unité d'approximation comprend un sélecteur de voisinage d'approximation qui réalise cette sélection à partir des coordonnées du bloc courant.

Le voisinage d'approximation est choisi dans la mémoire tampon 22 avec des blocs entourant directement le bloc courant. Comme on l'a vu plus haut, cela permet de tenir compte des données disponibles au décodeur pour l'encodage des blocs suivants.

D'une manière pratique, si le bloc courant a un indice (x;y) dans le découpage de l'image en blocs, cela peut être fait en choisissant des blocs de coordonnées (p;q) avec :
- p choisi dans l'intervalle [x-k1;x],
- q choisi dans l'intervalle [y-k2;y], et
- (p;q) différent de (x;y),
k1 et k2 étant deux indices qui détermineront la taille du voisinage d'approximation. Ces indices influeront également sur le coût de calcul de l'algorithme et sa précision.

En effet, d'une manière générale, on peut considérer que si k1 et k2 sont trop petits, alors le voisinage d'approximation risque de ne pas être représentatif du bloc courant, par exemple dans les régions de fort contraste.

Inversement, si k1 et k2 sont trop grands, alors le voisinage d'approximation risque de ne pas être plus représentatif car forcément trop distinct du bloc courant. En outre, plus le voisinage est grand, et plus le coût de calcul sera élevé.

Une fois sélectionnés, les données associées à ces blocs sont ordonnées dans un vecteur qui va former le vecteur à approcher.

On notera que ce vecteur est appelé "voisinage causal" car il est considéré comme "causalement" relié au bloc courant.

Ensuite, dans une opération 310, l'unité d'approximation déterminé un voisinage de recherche du bloc courant. C'est ce voisinage de recherche qui va servir de base d'approche dans l'algorithme.

Dans le mode de réalisation décrit ici, l'unité d'approximation comprend un sélecteur de base d'approche qui réalise cette sélection à partir des coordonnées du bloc courant.

Dans le cas de la méthode spatiale, cela peut être fait en définissant une fenêtre de recherche comprenant des blocs d'indice (p;q) avec:
- p choisi dans l'intervalle [x-m;x] pour q choisi dans l'intervalle [y-n;y-k2-1], et
- p choisi dans l'intervalle [x-m;x-k1-1] pour q choisi dans l'intervalle [y-k2;y], m et n étant des indices qui définissent la taille de la fenêtre de recherche.

Cette fenêtre de recherche tient compte du fait que, pour le décodage avec la méthode spatiale, seuls les blocs de l'image courante qui ont déjà été décodés seront accessibles au décodeur.

Dès lors, pour assurer la symétrie de l'architecture, côté encodage, seuls les blocs "déjà encodés", doivent être utilisés. Ces blocs "déjà encodés" sont ceux qui sont au-dessus du voisinage causal, et "à gauche" dans la même ligne, comme décrit ci-dessus.

Une fois la fenêtre de recherche définie, les blocs sont agences en un voisinage de recherche sous la forme d'une matrice dont:
- chaque colonne comprend les échantillons de k1^{∗}k2 blocs, c'est-à-dire le même nombre de blocs que le voisinage causal ajouté du bloc à encoder, et
- chaque colonne comprend des blocs de la fenêtre de recherche, choisis par exemple sélection par une fenêtre glissante qui part du bloc de coordonnées [x-m; y-n] et qui parcourt la fenêtre de recherche de haut en bas et de gauche à droite comme défini plus haut. La fenêtre glissante a une taille k1^{∗}k2.

Ainsi, la matrice comprend les données des blocs déjà encodés sélectionnés comme le voisinage de recherche pour le bloc à encoder, et, dans chaque colonne, les derniers éléments correspondent aux données du bloc à encoder.

Enfin, la matrice est ramenée à un nombre de lignes correspondant à celui du voisinage causal. Cela revient en fait à retirer les éléments de la fenêtre glissante qui correspondent aux données du bloc à encoder. Ces éléments retirés sont stockés pour la suite.

Ensuite, dans une opération 320, l'algorithme de "matching pursuit" en tant que tel est réalisé comme décrit plus haut par un calculateur, avec comme vecteur en entrée le voisinage causal, et comme base d'approche le voisinage de recherche.

Cette opération peut être accompagnée comme cela a été décrit plus haut du stockage de la meilleure approximation du bloc courant pour l'opération optionnelle 230.

Enfin, dans une opération 330, la matrice correspondant au voisinage de recherche tiré de la fenêtre de recherche est restaurée avec les valeurs qui ont été stockées en 310, et cette matrice est multipliée par l'approximation (vecteur de poids) obtenue en 320.

Ensuite, les derniers termes correspondant au bloc à encoder du vecteur résultant sont récupérés et sont retournés comme approximation du bloc courant.

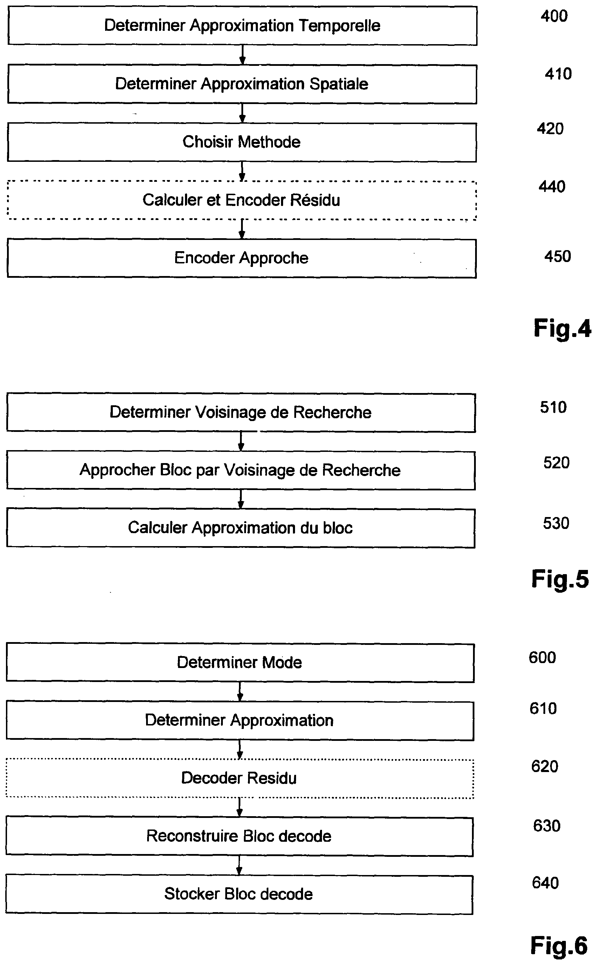

La figure 4 représente un diagramme générique du fonctionnement d'un deuxième mode de réalisation, ne rentrant pas dans la portée de l'invention, définie par les revendications ci-dessous, pour l'encodeur 2.

Dans ce deuxième mode de réalisation, l'architecture est basée sur le principe que les unités d'approximation côté encodeur et côté décodeur vont fonctionner de manière différente, mais avec des données induisant un résultat identique.

Pour cela, l'approximation d'un bloc donné est réalisée pour le bloc donné et plus pour des blocs dans un voisinage causal de celui-ci. Ici, le décodeur 4 aura besoin de connaitre la méthode qui a servi au calcul de l'approximation d'un bloc pour le retrouver, ainsi que le vecteur de poids qui permet d'approcher le bloc donné.

Dans ce deuxième mode de réalisation, les opérations 400, 410 et 420 sont essentiellement identiques aux opérations 200, 210 et 220, à cela prêt que l'approximation est légèrement différente comme cela apparaitra mieux avec la figure 5.

La figure 5 représente un exemple de mise en œuvre de l'algorithme de "matching pursuit" des opérations 400 et 410.

Comme on l'a mentionné plus haut, cette mise en œuvre est légèrement différente, comme elle est basée non plus sur une approximation des blocs environnants, mais sur une approximation du bloc lui-même.

Ainsi, une opération équivalente à l'opération 300 n'est pas nécessaire, et l'approximation commence avec une opération 510 de détermination du voisinage de recherche.

C'est ce voisinage de recherche qui va servir de base d'approche dans l'algorithme.

Dans le cas de la méthode spatiale, cela peut être fait en définissant une fenêtre de recherche comprenant des blocs d'indice (p;q) avec :
- p choisi dans l'intervalle [x-m;x] pour q choisi dans l'intervalle [0;y-1], et
- p choisi dans l'intervalle [x-m;x-1] pour q=y,
m et n étant deux indices qui détermineront la taille du voisinage de recherche et donc le coût de calcul de l'algorithme et sa précision.

En effet, d'une manière générale, on peut considérer que si m et n sont trop petits, alors le voisinage de recherche risque de ne pas être représentatif du bloc courant, par exemple dans les régions de fort contraste. Inversement, si m et n sont trop grands, alors le voisinage de recherche risque de ne pas être plus représentatif car forcément trop distinct du bloc courant. En outre, plus le voisinage est grand, et plus le coût de calcul sera élevé.

Dans le cas de la méthode temporelle, cela peut être fait en choisissant des blocs dans un rectangle de cotes m et n, centré sur le bloc courant, en tenant compte des bords de l'image, dans les images précédentes (ou suivantes selon la méthode) qui ont déjà été encodées.

Une fois la fenêtre de recherche définie, les blocs sont agences en un voisinage de recherche sous la forme d'une matrice dont chaque colonne contient les valeurs d'un bloc.

L'opération 510 est donc fonctionnellement proche de l'opération 310, sauf qu'elle est plus simple comme il n'est pas nécessaire de substituer le voisinage causal au bloc courant.

Cela simplifie l'établissement du voisinage de recherche et permet d'inclure en plus des blocs qui correspondent au voisinage causal dans le cas de la méthode spatiale.

Ensuite, clans une opération 520, l'algorithme de "matching pursuit" en lui-même est réalisé, avec comme vecteur en entrée le bloc courant, et comme base d'approche le voisinage de recherche.

Comme on le voit ici, l'opération 520 est proche de l'opération 320, à cela prêt que, comme on l'a mentionné plus haut, c'est le bloc courant lui-même qui est approché par le voisinage de recherche et plus le voisinage causal du bloc courant.

Enfin, dans une opération 530, l'approximation obtenue est retournée, c'est-à-dire le vecteur approché avec le vecteur de coefficients correspondant.

Il ressort donc que les méthodes d'approximation des premier et deuxième modes de réalisation sont très proches, et que leur différence porte principalement sur l'élément qui est approché.

Comme mentionné plus haut, les opérations 400 et 410 sont suivies de l'opération 420. Cette opération est identique a l'opération 220 de la figure 3 et vise à choisir celle des deux approximations (spatiale ou temporelle) qui est la meilleure en fonction de critères établis (fidélité au bloc, compromis qualité/débit, etc.).

Ensuite, une opération optionnelle 440 peut être réalisée. Cette opération est similaire à l'opération d'encodage du résidu 240 de la figure 2. Mais cette opération doit tenir compte que c'est le vecteur de poids qui est transmis dans ce mode de réalisation, et plus seulement la méthode d'encodage.

Il s'agit ici d'opérer de la même manière, à savoir encoder le résidu par transformation, puis quantification et codage entropique pour stockage comme donnée encodées complémentaire. Ensuite, décoder de manière entropique, puis déquantifier, et faire la transformation inverse.

Parallèlement, il est prévu de quantifier et déquantifier l'approximation tirée de l'opération 420 pour tenir compte du bruit de quantification sur cet élément.

Enfin, ajouter ces deux éléments, et le stocker dans la mémoire tampon 22 pour remplacer l'approximation tirée de l'opération 420 et ainsi améliorer l'encodage des blocs suivants.

Enfin dans une opération 450, le type d'approximation (spatiale ou temporelle) tiré de l'opération 420 et le vecteur d'approximation correspondant contenant les poids de la combinaison linéaire de la base de recherche sont codés de manière entropique et stockés comme données de bloc d'image encodé.

Dans le cas où l'opération 440 n'a pas été réalisée, l'opération 450 prévoit de quantifier et déquantifier l'approximation (vecteur de poids) tirée de l'opération 420 pour tenir compte du bruit de quantification sur cet élément, et de le stocker dans la mémoire tampon 22 pour remplacer l'approximation tine de l'opération 420 et améliorer l'encodage des blocs suivants.

Ainsi, comme pour le premier mode de réalisation, on obtient :
- des données à décoder, qui sont le type d'approximation (spatiale ou temporelle) tiré de l'opération 420 et le vecteur d'approximation correspondant contenant les poids de la combinaison linéaire de la base de recherche qui sont codés par quantification et codage entropique ; et
- des données de blocs d'image déjà encodés, qui sont les données encodées-décodées (tenant compte de la transmission des résidus ou pas) et qui sont stockées dans la mémoire tampon.

Comme on le voit ici, la différence principale avec le premier mode de réalisation est que c'est le bloc lui-même qui est approché, et que cette approximation est transmise comme donnée encodée avec un marqueur de la méthode utilisée pour choisir les blocs qui ont servi à calculer cette approximation.

Il suffit au décodeur de multiplier le vecteur contenant les poids de la combinaison linéaire par la base de recherche désignée par le marqueur de méthode pour réaliser la combinaison linéaire avec les données déjà décodées des blocs du voisinage de recherche pour retrouver l'approximation du bloc original.

On notera que dans les deux modes de réalisation décrits, un drapeau ou une autre donnée peut être enregistrée dans le fichier 8 pour indiquer quel mode de réalisation a été utilisé pour l'encodage, ainsi que d'autres informations, comme par exemple le seuil de convergence de l'algorithme de matching pursuit, les dimensions des images etc...

La figure 6 représente une opération effectuée par le décodeur 4 pour décoder le fichier 8.

Dans une première opération 600, le décodeur 4 appelle le découpeur 40 pour découper les images en blocs courants et les traiter. Dans cette même opération, le découpeur 40 peut lire un drapeau ou autre donnée du fichier 8 qui indique quel est le mode de réalisation qui a été utilisé pour réaliser l'encodage.

Dans les deux modes de réalisation, cela peut être également tire du marqueur de la méthode d'approximation. Le découpeur 40 envoie alors les données à décoder dans l'unité de décodage 48.

L'unité de décodage 48 peut alors envoyer les données dans l'une ou l'autre de l'unité d'approximation spatiale 44 et de l'unité d'approximation temporelle 46, avec un drapeau indiquant de quelle manière la combinaison linéaire des données à décoder doit être faite avec le voisinage de recherche.

Ensuite, dans une opération 610, l'unité 44 ou 46 qui a reçu les données à décoder opère pour déterminer une approximation du bloc courant.

## Revendications

1. Dispositif de décodage d'un flux de données d'images numériques, comprenant :
* une mémoire de travail (42) pour des données de blocs d'image déjà décodés,
* un pilote (40), monté pour analyser un flux incident de données d'images numériques, et agencé pour déterminer des données à décoder d'un bloc courant de coordonnées x, y dans le découpage de l'image en blocs de type premières données ou secondes données, pour stocker les premières données dans la mémoire de travail (42) en tant que données de blocs d'image déjà décodés, et pour appeler une unité de décodage (48) avec les secondes données à décoder,
* l'unité de décodage (48) réagissant à la réception de secondes données par :
- la sélection, par un sélecteur de voisinage d'approximation, de données de blocs d'image déjà décodées correspondant à un voisinage immédiat du bloc courant, ledit voisinage d'approximation étant constitué de l'ensemble des blocs de coordonnées (p, q) avec p et q tels que :
- k1 et k2 sont deux indices positifs ;
- p est choisi dans l'intervalle [x-k1;x] ;
- q est choisi dans l'intervalle [y-k2;y] ;
- (p,q) est différent de (x,y) ;
- la sélection, par un sélecteur de base d'approche, de certains blocs d'image déjà décodés correspondant à un voisinage élargi du bloc courant ne comprenant pas le voisinage d'approximation, formant une fenêtre de recherche, qui avoisine le bloc courant, ledit voisinage élargi définissant une fenêtre de recherche étant constitué de l'ensemble des blocs de coordonnées (p, q) avec p et q tels que :
- m et n sont deux indices positifs ;
- p est choisi dans l'intervalle [x-m;x] pour q choisi dans l'intervalle [y-n;y-k2-1];
- p est choisi dans l'intervalle [x-m;x-k1-1] pour q choisi dans l'intervalle [y-k2;y] ;
- l'agencement, par le sélecteur de base d'approche, des blocs de la fenêtre de recherche en un voisinage de recherche formant une base d'approche, ledit voisinage de recherche étant sous la forme d'une matrice dont :
- chaque colonne comprend les échantillons de k1^{∗}k2 blocs, et
- chaque colonne comprend des blocs de la fenêtre de recherche, sélectionnés par une fenêtre glissante de taille k1^{∗}k2 partant du bloc de coordonnées [x-m; y-n] et parcourant la fenêtre de recherche de haut en bas et de gauche à droite ;
- la suppression de la matrice, et le stockage des dernières lignes de la matrice correspondant à la taille du bloc courant ;
- le calcul, par un calculateur, d'une approximation du bloc courant, comprenant :
- la définition d'une fonction algébrique linéaire des données de la base d'approche paramétrée par la mise en œuvre d'un algorithme de type « matching pursuit » pour approximer les données du voisinage d'approximation à partir des données de la base d'approche ;
- la restauration de la matrice formant base d'approche, en ajoutant à nouveau les lignes supprimées et stockées ;
- l'application de la fonction algébrique à la matrice restaurée, pour approximer le bloc courant ;
- le stockage dans la mémoire de travail (42), pour le bloc courant, de données de blocs décodés tirées de cette approximation.

2. Dispositif selon la revendication 1, **caractérisé en ce que** les secondes données comprennent des données d'itération, et **en ce que** le calculateur est agencé pour exécuter un algorithme de détermination de ladite fonction algébrique linéaire un nombre de fois tiré des données d'itération.

3. Dispositif selon l'une des revendications précédentes, **caractérisé en ce que** certaines au moins des secondes données comprennent en outre des données à décoder complémentaires, et **en ce que** l'unité de décodage est agencée pour combiner l'approximation du bloc courant avec des données à décoder complémentaires correspondantes pour calculer les données de blocs d'image décodés du bloc courant.

4. Dispositif d'encodage (2) d'un flux de données d'images numériques, comprenant:
* une mémoire de travail (22) pour des données de blocs d'image déjà encodés,
* un pilote (20), monté pour analyser un flux incident de données d'images numériques, et agencé pour déterminer des données à encoder d'un bloc courant de coordonnées x, y dans le découpage de l'image en blocs de type premières données ou secondes données, pour stocker les premières données dans la mémoire de travail (22) en tant que données de blocs d'image déjà encodes, et pour appeler une unité d'encodage (28) avec les secondes données à encoder,
* l'unité d'encodage (28) réagissant à la réception de secondes données par:
- la sélection, par un sélecteur de voisinage d'approximation, de données de blocs d'image déjà encodées correspondant à un voisinage immédiat du bloc courant, ledit voisinage d'approximation étant constitué de l'ensemble des blocs de coordonnées (p, q) avec p et q tels que :
- k1 et k2 sont deux indices positifs ;
- p est choisi dans l'intervalle [x-k1;x] ;
- q est choisi dans l'intervalle [y-k2;y] ;
- (p,q) est différent de (x,y) ;
- la sélection, par un sélecteur de base d'approche, de certains blocs d'image déjà encodés correspondant à un voisinage élargi du bloc courant ne comprenant pas le voisinage d'approximation, formant une fenêtre de recherche, qui avoisine le bloc courant, ledit voisinage élargi définissant une fenêtre de recherche étant constitué de l'ensemble des blocs de coordonnées (p, q) avec p et q tels que :
- m et n sont deux indices positifs ;
- p est choisi dans l'intervalle [x-m;x] pour q choisi dans l'intervalle [y-n;y-k2-1];
- p est choisi dans l'intervalle [x-m;x-k1-1] pour q choisi dans l'intervalle [y-k2;y] ;
- l'agencement, par le sélecteur de base d'approche, des blocs de la fenêtre de recherche en un voisinage de recherche formant une base d'approche, ledit voisinage de recherche étant sous la forme d'une matrice dont :
- chaque colonne comprend les échantillons de k1^{∗}k2 blocs, et
- chaque colonne comprend des blocs de la fenêtre de recherche, sélectionnés par une fenêtre glissante de taille k1^{∗}k2 partant du bloc de coordonnées [x-m; y-n] et parcourant la fenêtre de recherche de haut en bas et de gauche à droite ;
- la suppression de la matrice, et le stockage des dernières lignes de la matrice correspondant à la taille du bloc courant ;
- le calcul, par un calculateur, d'une approximation du bloc courant, comprenant :
- la définition d'une fonction algébrique linéaire des données de la base d'approche, paramétrée par la mise en œuvre d'un algorithme de type « matching pursuit » pour approximer les données du voisinage d'approximation à partir des données de la base d'approche ;
- la restauration de la matrice formant base d'approche, en ajoutant à nouveau les lignes supprimées et stockées ;
- l'application de la fonction algébrique à la matrice restaurée, pour approximer le bloc courant ;- le stockage dans la mémoire de travail (22), pour le bloc courant, de données de blocs déjà encodées tirées de l'approximation du bloc courant.

5. Dispositif selon la revendication 4, **caractérisé en ce que** l'unité d'encodage est agencée pour tirer du calculateur des données d'itération, et pour encoder lesdites données d'itération dans les données à décoder.

6. Dispositif selon l'une des revendications 4 à 5, **caractérisé en ce que**, pour certains au moins des blocs courants, l'unité d'encodage est agencée pour calculer des données à décoder complémentaires à partir des données à décoder et des données de blocs d'image déjà encodés correspondantes de ces blocs, et pour les stocker avec ces données à décoder.

## Patentansprüche

1. Gerät zum Decodieren eines Datenflusses von digitalen Bildern, das Folgendes umfasst:
* einen Arbeitsspeicher (42) für Daten von bereits decodierten Bildblöcken,
* eine Steuerung (40), montiert zum Analysieren eines einfallenden Datenflusses von digitalen Bildern und ausgelegt zum Bestimmen von zu decodierenden Daten eines aktuellen Blocks mit x, y Koordinaten beim Unterteilen des Bildes in Blöcke des Typs von ersten oder zweiten Daten, zum Speichern der ersten Daten im Arbeitsspeicher (42) als Daten von bereits decodierten Bildblöcken, und zum Abrufen einer Decodiereinheit (48) mit den zu decodierenden zweiten Daten:
* wobei die Decodiereinheit (48) auf den Empfang der zweiten Daten reagiert durch:
- Auswählen, durch einen Approximationsnachbarschaftsselektor, von bereits decodierten Bildblockdaten entsprechend einem unmittelbaren Nachbarn des aktuellen Blocks, wobei die Approximationsnachbarschaft durch alle Blöcke mit Koordinaten (p, q) gebildet wird, wobei p und q so sind, dass:
- k1 und k2 zwei positive Indexe sind;
- p im Intervall [x-k1;x] ausgewählt wird;
- q im Intervall [y-k2;y] ausgewählt wird;
- (p, q) sich von (x,y) unterscheidet;
- Auswählen, durch einen Annäherungsbasisselektor, von bestimmten bereits decodierten Bildblöcken entsprechend einer erweiterten Nachbarschaft des aktuellen Blocks, der die Approximationsnachbarschaft nicht umfasst, Bilden eines Suchfensters, das dem aktuellen Block benachbart ist, wobei die ein Suchfenster definierende erweiterte Nachbarschaft von allen Blöcken mit Koordinaten (p, q) gebildet wird, wobei p und q so sind, dass:
- m und n zwei positive Indexe sind;
- p in dem Intervall [x-m;x] für q gewählt wird, ausgewählt in dem Intervall [y-n;y-k2-1];
- p in dem Intervall [x-m;x-k1-1] für q gewählt wird, ausgewählt in dem Intervall [y-k2;y];
- Gestalten, durch den Ansatzbasisselektor, der Blöcke des Suchfensters in einer eine Ansatzbasis bildenden Suchnachbarschaft, wobei die Suchnachbarschaft in Form einer Matrix gebildet wird, von der:
- jede Spalte die Samples von k1^{∗}k2 Blöcken umfasst, und
- jede Spalte Blöcke des Suchfensters umfasst, ausgewählt durch ein Gleitfenster der Größe k1^{∗}k2 ausgehend vom Block mit Koordinaten [x-m; y-n] und das Suchfenster von oben nach unten und von links nach rechts durchlaufend;
- Löschen der Matrix und Speichern der letzten Zeilen der Matrix entsprechend der Größe des aktuellen Blocks;
- Berechnen, durch einen Kalkulator, einer Aproximation des aktuellen Blocks, das Folgendes beinhaltet:
- Definieren einer linearen algebraischen Funktion von den Daten der Ansatzbasis, parametrisiert durch Implementieren eines Algorithmus des Typs "Matching Pursuit", zum Approximieren der Daten der Approximationsnachbarschaft auf der Basis der Daten der Ansatzbasis;
- Wiederherstellen der die Ansatzbasis bildenden Matrix durch erneutes Hinzufügen der gelöschten und gespeicherten Zeilen;
- Anwenden der algebraischen Funktion auf die wiederhergestellte Matrix zum Approximieren des aktuellen Blocks;
- Speichern, im Arbeitsspeicher (42) für den aktuellen Block, von von dieser Approximation abgeleiteten decodierten Blockdaten.

2. Gerät nach Anspruch 1, **dadurch gekennzeichnet, dass** die zweiten Daten Iterationsdaten umfassen, und dadurch, dass der Kalkulator zum Ausführen eines Algorithmus zum Bestimmen der linearen algebraischen Funktion mit einer aus den Iterationsdaten abgeleiteten Häufigkeit ausgestattet ist.

3. Gerät nach einem der vorherigen Ansprüche, **dadurch gekennzeichnet, dass** mindestens bestimmte der zweiten Daten ferner zusätzliche zu decodierende Daten umfassen, und dadurch, dass die Decodiereinheit zum Kombinieren der Approximation des aktuellen Blocks mit entsprechenden zusätzlichen zu decodierenden Daten zum Berechen der Daten von decodierten Bildblöcken des aktuellen Blocks ausgestattet ist.

4. Gerät (2) zum Encodieren eines Datenflusses von digitalen Bildern, das Folgendes umfasst:
* einen Arbeitsspeicher (22) für Daten von bereits encodierten Bildblöcken,
* eine Steuerung (20), montiert zum Analysieren eines einfallenden Flusses von digitalen Bilddaten und ausgestattet zum Bestimmen von zu encodierenden Daten eines aktuellen Blocks mit x, y Koordinaten beim Unterteilen des Bildes in Blöcke des Typs von ersten Daten oder zweiten Daten, zum Speichern der ersten Daten im Arbeitsspeicher (22) als Daten von bereits encodierten Bildblöcken, und zum Abrufen einer Encodiereinheit (28) mit den zu encodierenden zweiten Daten,
* wobei die Encodiereinheit (28) auf den Empfang von zweiten Daten reagiert durch:
- Auswählen, durch einen Approximationsnachbarschaftsselektor, von Daten von bereits encodierten Bildblöcken entsprechend einer unmittelbaren Nachbarschaft des aktuellen Blocks, wobei die Approximationsnachbarschaft durch alle Blöcke von Koordinaten (p, q) gebildet wird, wobei p und q derart sind, dass:
- k1 und k2 zwei positive Indexe sind;
- p im Intervall [x-k1;x] ausgewählt wird;
- q im Intervall [y-k2;y] ausgewählt wird;
- (p, q) sich von (x,y) unterscheidet;
- Auswählen, durch einen Ansatzbasisselektor, von bestimmten bereits encodierten Bildblöcken entsprechend einer erweiterten Nachbarschaft des aktuellen Blocks, der die Approximationsnachbarschaft nicht umfasst, Bilden eines Suchfensters, das dem aktuellen Block benachbart ist, wobei die ein Suchfenster definierende erweiterte Nachbarschaft von allen Blöcken mit Koordinaten (p, q) gebildet wird, wobei p und q so sind, dass:
- m und n zwei positive Indexe sind;
- p in dem Intervall [x-m;x] für q gewählt wird, ausgewählt in dem Intervall [y-n;y-k2-1] ;
- p in dem Intervall [x-m;x-k1-1] für q gewählt wird, ausgewählt in dem Intervall [y-k2;y];
- Gestalten, durch den Ansatzbasisselektor, der Blöcke des Suchfensters in einer eine Ansatzbasis bildenden Suchnachbarschaft, wobei die Suchnachbarschaft in Form einer Matrix gebildet wird, von der:
- jede Spalte Samples von k1^{∗}k2 Blöcken umfasst, und
- jede Spalte Blöcke des Suchfensters umfasst, ausgewählt durch ein Gleitfenster der Größe k1^{∗}k2 ausgehend vom Block mit Koordinaten [x-m; y-n] und das Suchfenster von oben nach unten und von links nach rechts durchlaufend;
- Löschen der Matrix und Speichern der letzten Zeilen der Matrix entsprechend der Größe des aktuellen Blocks;
- Berechnen, durch einen Kalkulator, einer Approximation des aktuellen Blocks, das Folgendes beinhaltet:
- Definieren einer linearen algebraischen Funktion von Daten der Ansatzbasis, parametrisiert durch Implementieren eines Algorithmus des Typs "Matching Pursuit", zum Approximieren der Daten der Approximationsnachbarschaft auf der Basis der Daten der Ansatzbasis;
- Wiederherstellen der die Ansatzbasis bildenden Matrix durch erneutes Hinzufügen der gelöschten und gespeicherten Zeilen;
- Anwenden der algebraischen Funktion auf die wiederhergestellte Matrix zum Approximieren des aktuellen Blocks;
- Speichern, im Arbeitsspeicher (42) für den aktuellen Block, von bereits encodierten Blockdaten, die von dieser Approximation des aktuellen Blockes abgeleitet werden.

5. Gerät nach Anspruch 4, **dadurch gekennzeichnet, dass** die Encodiereinheit zum Ableiten von Iterationsdaten von dem Computer und zum Encodieren der Iterationsdaten in den zu decodierenden Daten ausgestattet ist.

6. Gerät nach einem der Ansprüche 4 bis 5, **dadurch gekennzeichnet, dass**, für mindestens bestimmte der aktuellen Blöcke, die Encodiereinheit zum Berechnen der zusätzlichen zu decodierenden Daten auf der Basis der zu decodierenden Daten und der entsprechenden Daten von bereits encodierten Bildblöcken diesen Blöcken und zum Speichern derselben mit diesen zu decodierenden Daten ausgestattet ist.

## Claims

1. A device for decoding a data stream of digital images, comprising:
* a working memory (42) for data of already decoded image blocks;
* a controller (40), mounted to analyse an incident data stream of digital images, and arranged to determine data to be decoded for a current block of coordinates x, y in the division of the image into blocks of the first or second data type, to store the first data in the working memory (42) as data of already decoded image blocks, and to call a decoding unit (48) with the second data to be decoded;
* the decoding unit (48) reacting to the reception of the second data by:
- selecting, by an approximation neighbourhood selector, data of already decoded image blocks corresponding to an immediate neighbourhood of the current block, said approximation neighbourhood being made up of all the blocks of coordinates (p, q), with p and q such that:
- k1 and k2 are two positive indices;
- p is selected in the interval [x-k1; x];
- q is selected in the interval [y-k2; y];
- (p, q) differs from (x, y);
- selecting, by a basis of approach selector, some already decoded image blocks corresponding to an extended neighbourhood of the current block not including the approximation neighbourhood, forming a search window, which adjoins the current block, said extended neighbourhood defining a search window being made up of all the blocks of coordinates (p, q), with p and q such that:
- m and n are two positive indices;
- p is selected in the interval [x-m; x], for q selected in the interval [y-n; y-k2-1];
- p is selected in the interval [x-m; x-k1-1] for q selected in the interval [y-k2; y];
- arranging, by the basis of approach selector, blocks of the search window into a search neighbourhood forming a basis of approach, said search neighbourhood being in the form of a matrix, in which:
- each column comprises the samples of k1^{∗}k2 blocks; and
- each column comprises blocks of the search window, selected by a sliding window of size k1^{∗}k2 starting from the block of coordinates [x-m; y-n] and passing through the search window from top to bottom and from left to right;
- deleting the matrix and storing the last lines of the matrix corresponding to the size of the current block;
- computing, by a computer, an approximation of the current block, comprising:
- defining a linear algebraic function of the data of the basis of approach configured to implement a "matching pursuit" type algorithm to approximate the data of the approximation neighbourhood on the basis of the data of the basis of approach;
- restoring the matrix forming the basis of approach by again adding the deleted and stored lines;
- applying the algebraic function to the restored matrix to approximate the current block;
- storing, in the working memory (42), for the current block, data of decoded blocks derived from this approximation.

2. The device according to claim 1, **characterised in that** the second data comprise iteration data, and **in that** the computer is arranged to execute an algorithm for determining said linear algebraic function a number of times derived from the iteration data.

3. The device according to any one of the preceding claims, **characterised in that** at least some of the second data further comprise additional data to be decoded, and **in that** the decoding unit is arranged to combine the approximation of the current block with corresponding additional data to be decoded in order to compute the data of decoded image blocks of the current block.

4. A device (2) for encoding a data stream of digital images, comprising:
* a working memory (22) for data of already encoded image blocks;
* a controller (20), mounted to analyse an incident data stream of digital images, and arranged to determine data to be encoded for a current block of coordinates x, y in the division of the image into blocks of the first or second data type, to store the first data in the working memory (22) as data of already encoded image blocks, and to call an encoding unit (28) with the second data to be encoded;
* the encoding unit (28) reacting to the reception of the second data by:
- selecting, by an approximation neighbourhood selector, data of already encoded image blocks corresponding to an immediate neighbourhood of the current block, said approximation neighbourhood being made up of all the blocks of coordinates (p, q), with p and q such that:
- k1 and k2 are two positive indices;
- p is selected in the interval [x-k1; x];
- q is selected in the interval [y-k2; y];
- (p, q) differs from (x, y);
- selecting, by a basis of approach selector, some already encoded image blocks corresponding to an extended neighbourhood of the current block not including the approximation neighbourhood, forming a search window, which adjoins the current block, said extended neighbourhood defining a search window being made up of all the blocks of coordinates (p, q), with p and q such that:
- m and n are two positive indices;
- p is selected in the interval [x-m; x], for q selected in the interval [y-n; y-k2-1];
- p is selected in the interval [x-m; x-k1-1] for q selected in the interval [y-k2; y];
- arranging, by the basis of approach selector, blocks of the search window into a search neighbourhood forming a basis of approach, said search neighbourhood being in the form of a matrix, in which:
- each column comprises the samples of k1^{∗}k2 blocks; and
- each column comprises blocks of the search window, selected by a sliding window of size k1^{∗}k2 starting from the block of coordinates [x-m; y-n] and passing through the search window from top to bottom and from left to right;
- deleting the matrix and storing the last lines of the matrix corresponding to the size of the current block;
- computing, by a computer, an approximation of the current block, comprising:
- defining a linear algebraic function of the data of the basis of approach configured to implement a "matching pursuit" type algorithm to approximate the data of the approximation neighbourhood on the basis of the data of the basis of approach;
- restoring the matrix forming the basis of approach by again adding the deleted and stored lines;
- applying the algebraic function to the restored matrix to approximate the current block;
- storing, in the working memory (22), for the current block, data of already encoded blocks derived from the approximation of the current block.

5. The device according to claim 4, **characterised in that** the encoding unit is arranged to derive iteration data from the computer, and to encode the aforementioned iteration data in the data to be decoded.

6. The device according to any one of claims 4 to 5, **characterised in that**, for at least some of the current blocks, the encoding unit is arranged to compute additional data to be decoded on the basis of the data to be decoded and of the corresponding data of already encoded image blocks of these blocks, and to store them with these data to be decoded.
